Europäisches Patentamt

European Patent Office

Office européen des brevets

(11) Veröffentlichungsnummer: **0 331 807**
**A1**

## (12) EUROPÄISCHE PATENTANMELDUNG

(21) Anmeldenummer: 88120588.4

(22) Anmeldetag: 09.12.88

(51) Int. Cl.4: **B01D 21/24**

(30) Priorität: 25.02.88 DE 3805833

(43) Veröffentlichungstag der Anmeldung:
13.09.89 Patentblatt 89/37

(84) Benannte Vertragsstaaten:
AT BE CH DE ES LI LU NL

(71) Anmelder: Passavant-Werke AG

D-6209 Aarbergen 7(DE)

(72) Erfinder: Blackert, Wolf Dieter, Dipl.-Ing.
Schöne Aussicht 25
D-6204 Taunusstein 2(DE)
Erfinder: Leppert, Gerhard, Dipl.-Ing.
Postweg 80
D-8000 München 82(DE)
Erfinder: Schäfer, Heinz
Heidestrasse 16
D-6209 Aarbergen 2(DE)

(54) Verfahren zum Abziehen von Schwimmstoffen von der Oberfläche von Absitzbecken.

(57) Das neue Verfahren zum Abzug von Schwimmstoffen von der Oberfläche von Absitzbecken, Abscheidern und dgl. ist **dadurch gekennzeichnet,**
daß die Wehrkante des Ableitelements in Abhängigkeit vom Füllstand im Ableitelement oder dem ihm
nachgeschalteten Sammelbehälter bewegt wird. Man
senkt z.B. die Wehrkante zum Abzug von Schwimmschlamm bei Erreichen des Minimalstands im Ableitelement aus der oberen Schließstellung in die untere
Abzugstellung und zurück. Auch die umgekehrte
Steuerung bei Erreichen des Maximalstands ist
möglich. Die Stillstandszeiten in den Endstellungen
sind genauso einstellbar wie die Bewegungsgeschwindigkeit und die Endstellungen selber. Mehrere
Wehrkanten werden mit einer Folgesteuerung versehen.

EP 0 331 807 A1

## Verfahren zum Abziehen von Schwimmstoffen von der Oberfläche von Absitzbecken

Die Erfindung betrifft ein Verfahren zum Abziehen von Schwimmstoffen von der Oberfläche von Absitzbecken, Abscheidern und dgl.

Schwimmstoffabzugsvorrichtungen bedienen sich in der Regel an der Flüssigkeitsoberfläche angeordneter, in den Beckeninhalt eintauchender Ableitelemente, z.B. Ableitrinnen, die eine verstellbare Wehrkante aufweisen. Es ist üblich, daß diese Wehrkante auf eine von dem Schwimmstoffanfall abhängige Höhe eingestellt wird. Sind Spiegelschwankungen im Becken zu erwarten, dann bildet man die Wehrkante selbsteinstellend aus, z.B.. mit Schwimmern (DE-OS 34 43 309). Es hat sich jedoch gezeigt, daß auf eine bestimmte Höhe eingestellte Wehrkante den Schwimmstoff nur unbefriedigend abziehen. Stellt man die Kante hoch ein, um so wenig Wasser wie möglich mit abzuziehen, so fehlt der Druck, mit dem der Schwimmstoff in die Ableitrinne getrieben wird, er staut sich vor der Ableitrinne und wird, wenn sie sich bewegt, vor dieser hergeschoben.

Die Aufgabe, hier eine wesentliche Verbesserung zu erreichen, wird gemäß der Erfindung dadurch gelöst, daß die Wehrkante in Abhängigkeit vom Füllstand im Ableitelement oder einem nachgeschalteten Sammelbehälter bewegt wird. Überraschenderweise hat sich gezeigt, daß ein solches stoßweises Absenken bzw. Anheben der Wehrkante sehr gute Räumergebnisse erbringt. Es entsteht offenbar ein Schwall der durch das zeitweilige Heben und Senken der Wehrkante die kompakten Schwimmstoffe sehr gut abräumt.

Es gibt grundsätzlich drei Möglichkeiten der Steuerung. Man kann den maximalen Füllstand im Ableitelement bzw. dem nachgeschalteten Sammelbehälter abtasten und bei Vollmeldung die Wehrkante aus der unteren Abzugstellung in die obere Schließstellung heben und sie dort eine vorzugsweise einstellbare Zeit halten, bis man sie dann wieder in die Abzugstellung absenkt. In der Schließstellung hatte der Schwimmschlamm Zeit, abzulaufen oder abgezogen zu werden. Der umgekehrte Weg ist es, die Wehrkante in der Schließstellung zu halten und bei Minimalfüllstand in die Abzugstellung zu senken und danach wieder anzuheben. Die Zeit, in der die Wehrkante in der Abzugstellung verharrt, kann auch hier einstellbar sein. Beide Steuerungsarten können auch miteinander verknüpft werden: bei Maximalstand wird die Wehrkante aus der Abzugstellung so lange angehoben, bis sich in dem Ableitelement der Minimalstand einstellt; dann wird sie wieder abgesenkt. Dieses Anheben und Absenken kann von der Geschwindigkeit her einstellbar sein. Auch das Zeitintervall, das die Wehrkante in der Endstellung verharrt, kann einstellbar sein. Des weiteren kann das Anheben bzw. Absenken schrittweise in der Form erfolgen, daß die Bewegung erst fortgesetzt wird, wenn nach Ablauf einer einstellbaren Zeit der auslösende Füllstand erneut gemeldet wird. Anderenfalls wird die Bewegung bei Melden des anderen Limits umgekehrt.

Die oberste und unterste Grenzstellung der Wehrkante ist durch Anschläge festgelegt, wobei insbesondere der untere Anschlag individuell an den Schlammanfall einstellbar sein kann.

Bei größeren Absetzbecken ist es üblich, die Abzugrinne in mehrere Abschnitte mit einzeln einstellbaren Wehrkante zu unterteilen. Die Wehrabschnitte werden nun erfindungsgemäß mit einer Folgesteuerung in der Form ausgestattet, daß die Wehrkanten nacheinander verstellt werden, wobei der

Auslöseimpuls für die Verstellung der nächsten Wehrkante von der Ankunft der vorher verstellten Wehrkante in einer vorgegebenen Stellung geliefert wird.

Da der Schwimmschlammabzug erfindungsgemäß von einer Regelgröße gesteuert wird, die den Schwimmschlammanfall nicht berücksichtigt, wird die Schlammfördermenge in Ausgestaltung der Erfindung in Abhängigkeit vom erwarteten Schlammanfall einstellbar gemacht. Damit wird verhindert, daß mit dem Schwimmschlamm auch noch eine größere Menge Wasser abgezogen wird. Bei der zuvor geschilderten Folgesteuerung mehrerer Wehrkanten kann auch so vorgegangen werden, daß Wehrkanten in Beckenabschnitten, in denen erfahrungsgemäß weniger Schwimmschlamm anfällt, nur bis zu einer höheren Stellung abgesenkt werden oder sogar bei jeder zweiten Räumphase ausgelassen werden.

## Ansprüche

1. Verfahren zum Abziehen von Schwimmstoffen von der Oberfläche von Absitzbecken, Abscheidern und dgl., mit Hilfe eines mindestens eine verstellbare Wehrkante aufweisenden, in die Oberfläche eingetauchten Ableitelements, insbesondere einer Ableitrinne, **dadurch gekennzeichnet,** daß die Wehrkante in Abhängigkeit vom Füllstand im Ableitelement oder einem nachgeschalteten Sammelbehälter bewegt wird.

2. Verfahren nach Anspruch 1, **dadurch gekennzeichnet,** daß bei einstellbarem minimalem Füllstand die Wehrkante aus der oberen Schließstellung in die untere Abzugstellung abgesenkt und danach wieder in die Schließstellung angehoben wird.

3. Verfahren nach Anspruch 1, **dadurch gekennzeichnet,** daß bei einstellbarem maximalem Füllstand die Wehrkante aus der unteren Abzugstellung in die obere Schließstellung angehoben und danach wieder in die Abzugstellung abgesenkt wird.

4. Verfahren nach Anspruch 2 oder 3, **dadurch gekennzeichnet,** daß für die angefahrenen Stellungen Stillstandszeiten einstellbar sind.

5. Verfahren nach Anspruch 1, **dadurch gekennzeichnet,** daß bei maximalem Füllstand die Wehrkante aus der unteren Abzugstellung in die Schließstellung gehoben und bei minimalem Füllstand wieder in die Abzugstellung abgesenkt wird, und umgekehrt.

6. Verfahren nach Anspruch 2, 3 oder 5, **dadurch gekennzeichnet,** daß die Bewegungsgeschwindigkeit der Wehrkante einstellbar ist.

7. Verfahren nach Anspruch 2, 3 oder 5, **dadurch gekennzeichnet,** daß obere und untere Endstellung der Wehrkante durch einen Anschlag festgelegt sind.

8. Verfahren nach Anspruch 7, **dadurch gekennzeichnet,** daß die Anschläge höhenverstellbar sind.

9. Verfahren nach einem oder mehreren der vorstehenden Ansprüche, **dadurch gekennzeichnet,** daß die Schwimmstoffe über die Länge des Ableitelements in mehrere Abschnitte unterteilt abgezogen werden und daß bei den Abschnitten eine Folgesteuerung in der Form vorgesehen ist, daß die Wehrkante nacheinander verstellt werden, wobei der Auslöseimpuls für die Verstellung der nächsten Wehrkante von der Ankunft der vorher verstellten Wehrkante in einer Endstellung geliefert wird.

10. Verfahren nach einem oder mehreren der vorstehenden Ansprüche, **dadurch gekennzeichnet,** daß die Absenk- und/oder Hubbewegung unterbrochen und erst dann, wenn nach einer einstellbaren Zeitspanne der auslösende Maximal- bzw. Minimalfühler wieder anspricht, fortgesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 632 638 (PASSAVANT-WERKE AG) * Seite 4, letzter Absatz - Seite 5, Absatz 2; Ansprüche 1,3; Figuren 1-4 * --- | 1-3,5,7 | B 01 D 21/24 |
| X,P | DE-A-3 642 702 (PASSAVANT-WERKE AG) * Spalte 3, Zeilen 7-35; Spalte 3, Zeile 59 - Spalte 4, Zeile 4; Spalte 5, Zeilen 16-38; Ansprüche 1,10-12,14,17,25; Figur 7 * | 1-3,5-7 | |
| A,P | . --- | 6,8,9 | |
| A | DE-A-3 600 788 (R. TOTZKE GmbH) * Zusammenfassung; Ansprüche 1-7; Figuren * --- | 1-3 | |
| A | US-A-4 608 165 (S. GALPER) * Zusammenfassung; Figuren 1-4,8 * ----- | 1 | |

|  |  |
|---|---|
|  | **RECHERCHIERTE SACHGEBIETE (Int. Cl.4)** |
|  | B 01 D |

Der vorliegende Recherchenbericht wurde für alle Patentansprüche erstellt

| Recherchenort | Abschlußdatum der Recherche | Prüfer |
|---|---|---|
| DEN HAAG | 04-07-1989 | MARZENKE J. |